# FASCICULE DE BREVET EUROPEEN

(11) **EP 0 628 400 B1**
(45) Date de publication et mention de la délivrance du brevet: **06.08.1997**
(21) Numéro de dépôt: 94401108.9
(22) Date de dépôt: 18.05.1994
(51) Int. Cl.: B29C 53/58, B29C 53/56, F16C 3/02, F16D 3/40

(54) **Dispositif de liaison mécanique en résine renforcée de fibres bobinées - procédé de fabrication**
Vorrichtung zur mechanischen Verbindung aus mit gewickelten Fasern verstärktem Harz, Verfahren zu deren Herstellung
Device for mechanical connection made of resin reinforced with wound fibres, method for manufacturing

(30) Priorité: 02.06.1993 FR 9306686
(43) Date de publication de la demande: 14.12.1994
(73) Titulaire: INSTITUT FRANCAIS DU PETROLE, 92502 Rueil-Malmaison (FR)
(72) Inventeur: Huvey, Michel, F-78380 Bougival (FR); Grosjean, François, F-78000 Versailles (FR); Montabord, Lucien, F-78500 Sartrouville (FR); Bernollin, Roland, F-07270 Lamastre (FR)

(56) Documents cités:
- EP-A- 0 122 033
- DE-A- 3 321 349
- FR-A- 2 602 458
- COMPOSITES, vol.28, no.4, Juillet 1988, PARIS, FRANCE pages 74 - 78, XP2449 TRITSCH 'Automatisation des Procédés d'Obtention des Pièces en Matériaux Composites'

## Description

La présente invention concerne un dispositif de liaison mécanique entre deux éléments ainsi qu'un procédé de fabrication d'un tel dispositif.

On connaît la fabrication de pièces mécaniques au moyen de la technique de bobinage de fils de renfort autour d'un mandrin entraîné en rotation. Mais les fils sont enroulés selon des spires ayant pour axe l'axe de rotation du mandrin. Dans certains procédés antérieurs, pour fabriquer des pièces ayant plusieurs axes d'enroulements, le mandrin est nécessairement entraîné en rotation autour des différents axes. Le support du mandrin de bobinage est alors mécaniquement complexe. Au contraire, notre invention permet notamment d'effectuer des boucles de fils de renfort sans faire tourner le mandrin autour de l'axe des boucles.

On connaît le document EP-A-0.122.033 qui décrit une chape de joint universel conformément à le préambule de la revendication 1 constituée par une partie métallique renforcée par des fibres enrobées enroulées notamment autour des trois des chapes.

La présente invention concerne donc un dispositif de liaison mécanique destiné à lier entre eux deux éléments, ledit dispositif comportant un axe principal et deux moyens d'assemblage avec chacun desdits éléments, un premier moyen d'assemblage comportant au moins un trou adapté à recevoir une tige d'axe sensiblement orthogonal avec ledit axe principal et formé par des boucles de fibres. Le dispositif comporte des enroulements circonférentiels combinés avec des enroulements longitudinaux de façon à être adapté à encaisser principalement des efforts de traction entre lesdits deux éléments. Le second moyen d'assemblage comporte un alésage conique coaxial avec ledit axe principal dont le col étroit est disposé à une distance plus grande dudit premier moyen d'assemblage par rapport à la base du cône. L'alésage conique est formé principalement par des enroulements autour de l'axe principal et ledit premier moyen est formé par des enroulements en boucles autour dudit trou dont les brins forment des enroulements longitudinaux.

Les enroulements en boucles autour du trou pourront comporter un nombre prédéterminé de boucles dont les brins entourant le trou pourront être sensiblement parallèles entre eux et de boucles dont les brins se croisent.

Le premier moyen d'assemblage pourra être en forme de chape dont les deux flasques comportent lesdits enroulements en boucles de fils de renfort.

Le dispositif pourra comporter des inserts enrobés par les fils imprégnés de résine.

L'invention concerne également un procdé de fabrication d'un dispositif qui comporte les étapes suivantes :
- on fait tourner un mandrin autour d'un axe zz',
- on déplace un moyen de guidage d'au moins une fibre selon deux directions xx' et yy'.

Dans le procédé, le mandrin comporte une partie conique mâle d'axe zz' et au moins une tige d'axe sensiblement orthogonal à l'axe zz', et on contrôle les déplacements du mandrin et du moyen de guidage pour effectuer des enroulements de fibres en spires circonférentielles autour de l'axe zz' sur la partie conique du mandrin et en boucles longitudinales autour de ladite tige.

Le moyen de guidage pourra se déplacer selon une direction parallèle à zz', l'autre direction de déplacement lui étant perpendiculaire.

Le mandrin pourra comporter plusieurs tiges d'axe sensiblement orthogonal à l'axe zz'.

La fibre pourra être imprégnée de résine.

La résine pourra être polymérisée sur le mandrin.

Le mandrin bobiné par les fibres imprégnées pourra être entouré par des coquilles donnant une forme extérieure régulière à ladite pièce.

Un programme de machine à commande numérique pourra contrôler et synchroniser lesdits déplacements du moyen de guidage et du mandrin, et la résistance mécanique des pièces obtenues pourra être prédéterminée par certains paramètres du programme.

L'invention sera mieux comprise et ses avantages apparaîtront clairement à la lecture de la description d'exemples, nullement limitatifs, illustrés par les figures suivantes :
- la figure 1 représente schématiquement une machine de bobinage,
- les figures 2A et 2B décrivent le principe de bobinage,
- la figure 3A illustre une forme de mandrin selon une réalisation préférentielle,
- la figure 3B montre en coupe le dispositif réalisé à l'aide du mandrin, et
- la figure 3C montre en perspective une variante du dispositif.

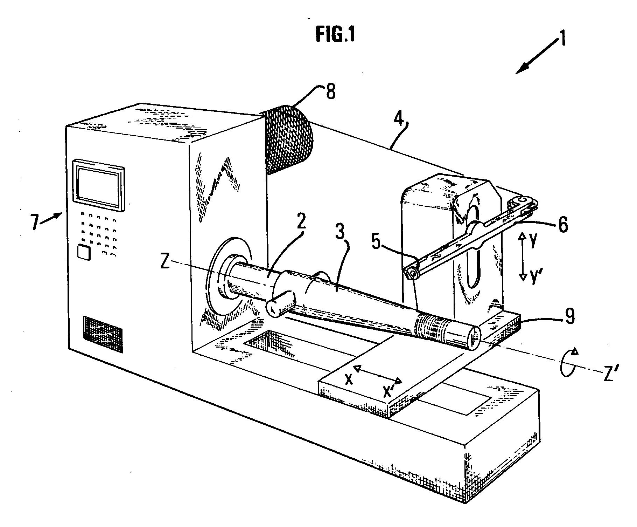

La figure 1 représente une machine de bobinage 1 comportant un arbre 2 rotatif sur lequel est fixé un mandrin 3 utilisé comme support de bobinage du fil de renfort 4. L'arbre 2 et le mandrin 3 sont entraînés en rotation autour de l'axe zz'. Un anneau 5 de guidage du fil 4, est porté par un bras 6. Ce bras 6 est porté par un chariot 9 adapté à déplacer l'anneau selon un axe xx', parallèle à zz'. Le bras 6 est adapté à être déplacé selon un axe yy', généralement vertical.

Le déplacement de l'anneau 5 selon xx' fait effectuer sensiblement une translation du point de contact de la fibre 4 avec une portion du mandrin 3.

Le déplacement selon yy' permet d'adapter la distance de l'anneau 5 à la forme spécifique du mandrin 3 et d'optimiser ainsi la précision de guidage du fil sur la forme extérieure du mandrin.

La machine de bobinage comporte des moyens de commande numérique 7 ainsi que des moyens de programmation de l'asservissement des trois mouvements :
- rotation du mandrin 3 autour de zz', dans les deux sens,
- déplacement de l'anneau 5 selon xx',
- déplacement de l'anneau 5 selon yy'.

Pour réaliser le dispositif selon la présente invention, les différents déplacements sont asservis en fonction de la forme extérieure du mandrin de bobinage 3.

Pour l'exemple, la machine utilisée pour les essais est une machine fabriquée par la société ATELIERS DE LA CHAINETTE (ADC), du type "Étude 1". Cette machine est pilotée par une commande numérique NUM720 asservissant la rotation du mandrin et le déplacement horizontal de la tête de dépose 5. La machine a été modifiée selon les directives de la demanderesse pour asservir le troisième axe yy' correspondant à la plongée de l'anneau ou tête de dépose par rapport au mandrin. L'asservissement de ce troisième axe est également effectué par la commande numérique NUM720.

Les fils de renforts sont déroulés à partir de la bobine 8. Les fils peuvent être préimprégnés par de la résine, par exemple selon les procédés décrits par les documents US-A-4932352 ou US-A-5133995, ou plongés dans un bain de résine (non représenté ici) situé entre la bobine 8 et l'anneau de dépose 5. Une fois le bobinage terminé, le mandrin peut être également plongé dans de la résine.

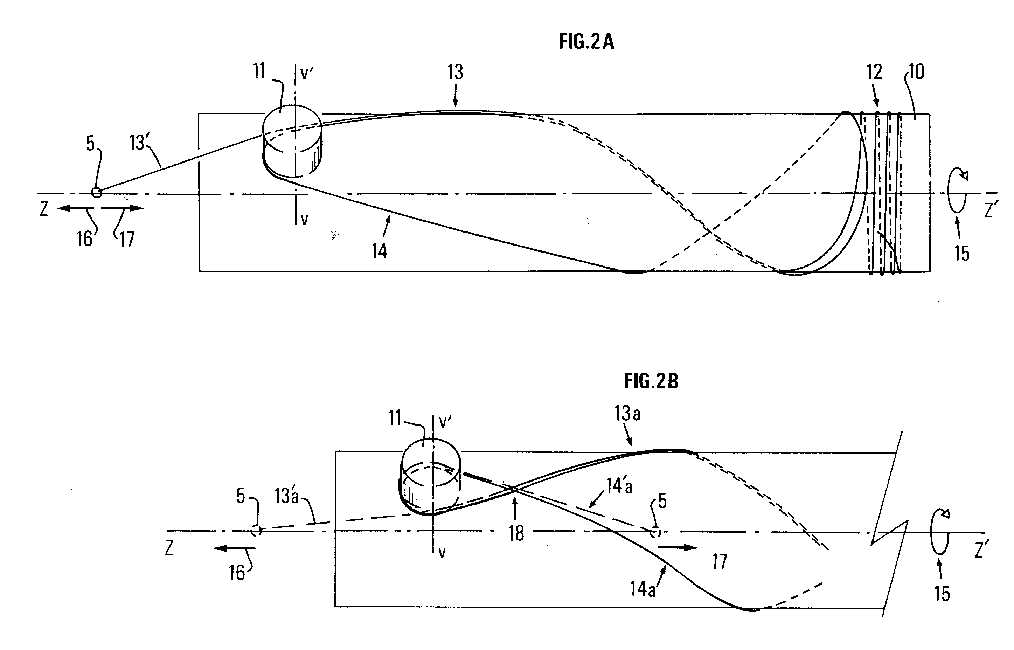

Les figures 2A et 2B montrent le principe d'un exemple de bobinage selon la présente invention, utilisant un mandrin de forme allongée et d'axe de rotation zz'. La partie allongée 10 comporte au moins une broche 11 d'axe vv' perpendiculaire à l'axe zz'.

On ne sortira pas du cadre de la présente invention si la broche 11 à une section autre que circulaire et si l'axe vv' présente un certain angle d'inclinaison par rapport à la direction orthogonale à l'axe zz', par exemple entre 0 et 20 degré.

Les enroulements filamentaires 12 sont obtenus en asservissant le nombre de tours de rotation du mandrin en fonction de la longueur de déplacement de l'anneau de dépose du fil selon la direction xx'.

On obtient des enroulements de spires faisant un angle proche de 90 degrés par rapport à l'axe zz', en limitant le déplacement en xx' par tour du mandrin. Ces enroulements circonférentiels sont adaptés aux renforts vis-à-vis de contraintes transversales par rapport à l'axe zz'.

On obtient des enroulements longitudinaux de spires faisant un angle faible par rapport à l'axe zz', en augmentant le déplacement longitudinal xx' par tour. Ces enroulements longitudinaux sont adaptés aux renforts vis-à-vis des contraintes longitudinales selon zz'.

On obtient le type de boucle en U autour de la broche 11 en coordonnant les différents déplacements principaux tout en prenant en compte la position de la broche par rapport au fil 13' déposé par l'anneau 5. Sur la figure 2A, la rotation du mandrin, donc de la broche 11, est selon la flèche 15. Le fil 13' est déposé sur le mandrin par le déplacement de l'anneau 5 selon la flèche 16, de façon à ce que le fil passe en avant de la broche 11 par rapport à son mouvement de rotation. Lorsque la broche 11 tourne d'un certain angle, celle-ci courbe le fil 13' autour de sa forme extérieure. Puis l'anneau est déplacé dans le sens de la flèche 17 pour poser le fil selon le brin 14.

Ainsi, en coordonnant la rotation de la broche 11 (ou du mandrin) et le déplacement de l'anneau 5, on obtient sur le mandrin et autour de la broche 11, une boucle de fil de renfort sensiblement en forme de U dont les deux brins sont référencés 13 et 14. Pour que la résistance mécanique de la boucle soit adaptée à des efforts longitudinaux (selon zz'), l'enroulement des brins 13 et 14 est avantageusement réalisé selon des angles les plus faibles possibles par rapport à l'axe zz'. La forme spécifique du mandrin peut faciliter une telle pose des fils de renfort.

La répétition d'un certain nombre de boucles autour de la broche 11, permet de régler la résistance de la pièce ainsi réalisée.

La figure 2B représente un autre type de boucle autour de la broche 11. La broche 11 tourne selon le sens de la flèche 15. L'anneau 5 dépose le fil 13'a de façon à ce qu'il passe derrière la broche 11, par rapport à la rotation de la broche. Pour enrouler le fil autour de la broche 11, la position relative de l'anneau 5 par rapport à la broche est modifiée pour que le fil soit sensiblement selon 14'a. Pour cela, la commande inverse le sens de rotation du mandrin pour effectuer une portion de tour tout en synchronisant un déplacement de l'anneau selon la flèche 17. Puis le mandrin est à nouveau entraîné en rotation selon la flèche 15 et l'anneau selon la flèche 17 pour déposer le fil selon le brin 14a.

Ainsi, la figure 2B illustre l'obtention d'une boucle de fil autour de la broche 11 dont les brins 13a et 14a se croisent au point 18.

Dans chacun des modes de réalisation des boucles en U ou croisée, le déplacement de l'anneau 5 selon yy' permet la mise en place précise des fils autour de la broche 11 en réglant la distance entre l'anneau et le mandrin d'axe zz', compte tenu de la position de la broche 11.

On peut également effectuer des tours complets de fils autour de la broche 11, en déplaçant l'anneau 5 selon la flèche 16 après qu'il ait déposé les fils selon 14'a. Les fils sont alors parallèles à la direction 13'a, après avoir effectués un tour complet autour de la broche 11. Le cycle de bobinage peut se poursuivre comme décrit sur la figure 2B.

Il est ainsi clair qu'avec une machine d'enroulement filamentaire, telle celle décrite sur la figure 1, on peut effectuer d'une manière continue des bobinages circonférentiels et des boucles autour d'une broche sensiblement orthogonale à l'axe de rotation du mandrin. Les boucles peuvent être en U, croisées ou effectuer un tour complet autour de la broche. Par programmation de la commande numérique, on peut bobiner automatiquement une pièce sur un mandrin.

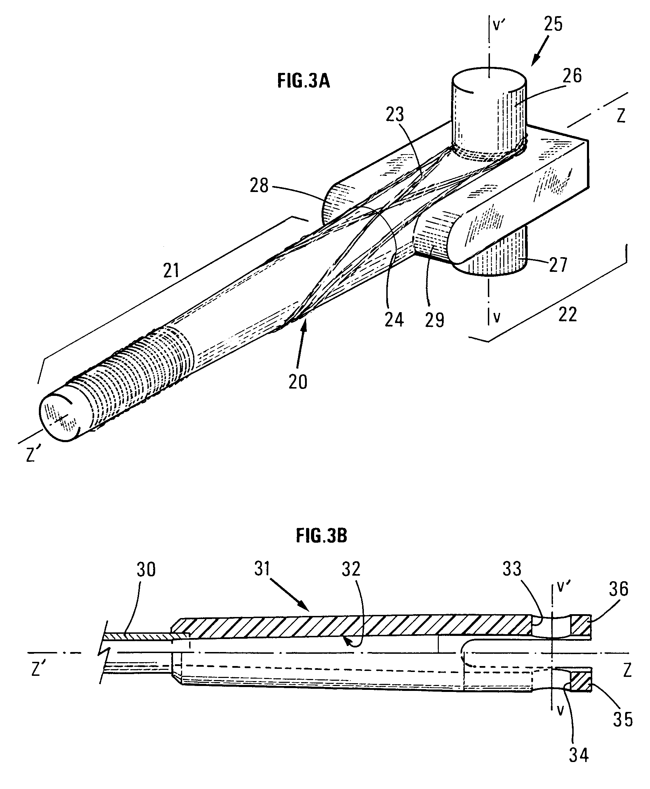

La figure 3A montre en perspective un mandrin partiellement bobiné. Le mandrin 20 possède une forme allongée selon l'axe principal zz'. Ce mandrin est monté sur la machine 1 pour être entraîné en rotation autour de l'axe zz'.

Le mandrin 20 est constitué d'une partie 21 et d'une partie 22. Ces deux parties correspondent à la fabrication par bobinage d'un dispositif de liaison mécanique entre deux éléments. Dans cet exemple, le moyen d'assemblage correspondant aux bobinages de la partie 21 du mandrin, est un cône femelle permettant l'attache sur un câble, jonc ou tige. L'autre moyen d'assemblage correspondant aux bobinages des boucles sur la partie 22 du mandrin, est sensiblement en forme de chape.

La partie 21 du mandrin est tronconique dont la base 24 est située proche de la partie 22, le col étroit du cône se trouvant donc du coté opposé. L'angle du cône est faible, en général inférieur à 10 degrés.

La base 24 du cône se prolonge par une partie cylindrique 23 ayant pour axe, l'axe zz', le diamètre du cylindre étant au moins égal au diamètre de la base 24.

Un arbre 25, démontable, passe à travers la partie cylindrique 23 par un perçage d'axe vv' perpendiculaire à zz'. L'arbre 25 constitue les broches 26 et 27 autour desquelles sont bobinées les boucles de fils de renfort.

Deux épaules 28 et 29, symétriques par rapport à zz', sensiblement orthogonaux à l'axe vv' et disposées le long de la partie cylindrique 23, assurent à la chape fabriquée par bobinage une cote précise entre les deux flasques et guident les fils de renfort en traction selon un plan sensiblement parallèle à l'axe zz'.

La programmation de bobinage répartit la géométrie de pose et le nombre de fils en fonction des contraintes mécanique sur le dispositif de liaison. Les efforts longitudinaux fournissent des contraintes de traction sur les flasques de la chape et des contraintes d'éclatements au niveau du cône où est encastré le câble. Le programme de bobinage doit répartir le nombre de fibres transversales et de fibres longitudinales, en particulier au niveau des boucles.

Un des avantages de l'invention est de pouvoir aisément optimiser la fabrication du dispositif en modifiant certains paramètres du programme de bobinage. Les temps de fabrication et la quantité de matière utilisée peuvent être directement reliés à la résistance mécanique désirée pour le dispositif.

Lorsque le mandrin est entièrement bobiné, et les fibres imprégnées de résine, la polymérisation est effectuée selon les techniques conventionnelles adaptées au type de résine.

Une fois la polymérisation achevée, l'arbre 25 est retiré, ainsi que le mandrin.

La figure 3B montre en coupe le dispositif 31 fabriqué selon le procédé de la présente invention par bobinage sur le mandrin représenté par la figure 3A. Une gaine en matériau souple 30 peut être fixée sur le dispositif par le bobinage en cours de fabrication. Cette gaine est notamment une protection du câble ancré dans la partie conique femelle 32 du dispositif 31. Le mode d'ancrage du câble ne sera pas décrit ici car il s'agit d'un mode bien connu de l'art. L'autre moyen d'assemblage du dispositif 31 est une chape constituée des flasques 35 et 36, comportant selon l'axe vv' des trous 33 et 34 adaptés à recevoir une broche de fixation.

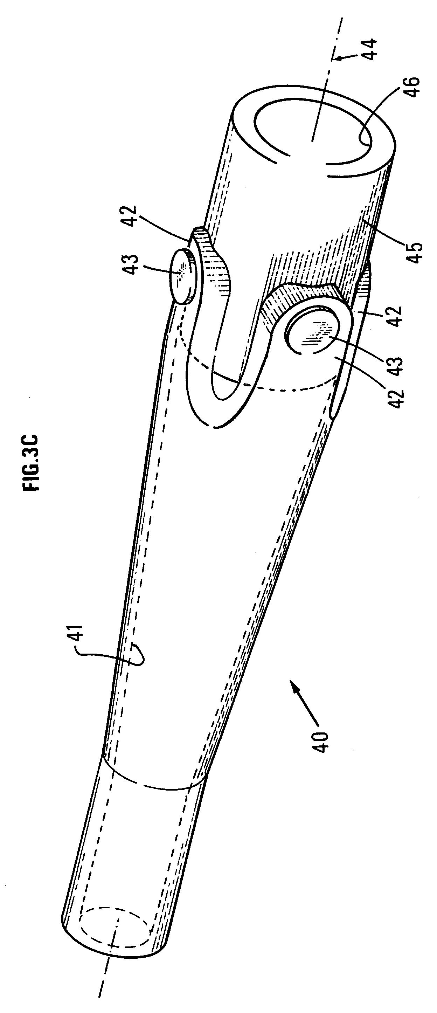

La figure 3C montre en perspective une variante 40 du dispositif. Comme le dispositif 31 de la figure 3B, il comporte une partie conique femelle fabriquée par bobinage selon la présente invention. L'autre moyen d'assemblage comporte plusieurs flasques 42 fabriquées également par bobinage (quatre réparties sur la circonférence). Des tiges 43 passent à travers les trous desdits flasques. Ces tiges sont préférentiellement sensiblement perpendiculaires à l'axe principal 44. Une pièce 45 de forme cylindrique pénètre entre les flasques 42 et est assemblée sur ledit autre moyen d'assemblage par la coopération des flasques 42 et des tiges 43.

Les pièces 45 et les tiges 43 peuvent faire partie du mandrin de bobinage du dispositif 40, ou bien être un insert métallique solidaire du dispositif. Dans ce cas, l'alésage 46 doit permettre l'ancrage du câble dans le cône femelle 41. La pièce 45 peut, par exemple, comporter un filetage (non représenté) pour l'assemblage sur une autre pièce.

Les fibres utilisées peuvent être de verre, de carbone ou d'aramide. Pour l'exemple, on peut utiliser des fibres de verre OCF ECR 2400 Tex de la Société Owens Corning Fiberglass, imprégnées de résine époxyde mélangée avec des réactifs, par exemple de l'Epon 828 (100 parties en poids), de durcisseur Nadic Méthyl Anhydride (NMA) (90 parties en poids) et d'accélérateur Benzyl DiMéthyl Amine (BDMA) (2 parties en poids), fabriqués par la société SHELL.

La résine thermodurcissable n'est pas nécessairement une époxyde mais peut être aussi une résine polyester, vinylester, mélamine formaldéhyde, formo-phénolique.

On peut aussi utiliser les préimprégnés à base de résine thermoplastique telle que du Polypropylène, du Polyéthylène, du Polyamide, l'enroulement nécessitant alors un dispositif pour venir fondre le polymère au niveau du point de pose des fibres sur le mandrin.

On peut aussi utiliser des fibres de polyaramide, par exemple des fibres en Kevlar 49 fabriquées par Dupont de Nemours. Ces fibres peuvent être enroulées par du SBS ou Styrène Butadiène Styrène copolymére séquencé en solution dans du trichlorure d'éthylène. Le SBS utilisé peut être du KRATON fabriqué par Shell Chimie.

Le choix des matériaux utilisés est fait en fonction des propriétés mécaniques et chimiques recherchés pour le dispositif selon l'invention, ainsi qu'en fonction de critères économiques.

Il faut noter que le dispositif et les pièces mécaniques fabriquées selon l'invention présentent l'avantage de ne pas être soumis à la corrosion comme peuvent l'être des pièces métalliques, notamment en ambiance saline ou faiblement acide.

De plus, les dispositifs de liaison mécanique sont soumis à de la fatigue. Or, il s'avère que le matériau composite fabriqué à partir de fibres de renfort enrobées de résine est très résistant à la fatigue comparativement aux alliages métalliques courants, notamment s'il s'agit de fibres préimprégnées.

Les essais réalisés ont montré que des dispositifs de liaison, tel celui représenté sur la figure 3B, l'un fabriqué en alliage d'aluminium et l'autre en résine renforcée fibres de verre selon la présente invention, ont des performances mécaniques comparables pour des dimensions extérieures également comparables.

La méthode de fabrication selon l'invention permet une optimisation de l'automatisation de la fabrication puisque celle-ci fait appel essentiellement à une machine à commande numérique.

Bien entendu, la présente invention ne se limite pas à des pièces selon la figure 3B, par exemple, l'un des deux moyens d'assemblage peut être en forme de chape, et l'autre peut comporter une pièce filetée insérée et fixée par les enroulements de fils.

Dans une autre variante, des inserts métalliques ou non, peuvent être bobinés en cours de fabrication, par exemple des cylindres coaxiaux aux broches 11.

## Revendications

1. Dispositif de liaison mécanique (31, 40) destiné à lier entre eux deux éléments, ledit dispositif comportant un axe principal (zz', 44) et deux moyens d'assemblage avec chacun desdits éléments comportant des fibres de renfort enrobées de résine, un premier moyen d'assemblage (35, 36; 42) comportant au moins un trou (33, 34) adapté à recevoir une tige (43) d'axe sensiblement orthogonal avec ledit axe principal et formé par des boucles de fibres, caractérisé en ce que ledit dispositif comporte des enroulements circonférentiels combinés avec des enroulements longitudinaux de façon à être adapté à encaisser principalement des efforts de traction entre lesdits deux éléments, en ce que le second moyen d'assemblage comporte un alésage conique (32; 41) coaxial avec ledit axe principal dont le col étroit est disposé à une distance plus grande dudit premier moyen d'assemblage par rapport à la base du cône, en ce que ledit alésage conique est formé principalement par des enroulements circonférentiels (12) autour de l'axe principal et en ce que ledit premier moyen est formé par des enroulements en boucles autour dudit trou dont les brins (13, 14; 13a, 14a) forment des enroulements longitudinaux.

2. Dispositif selon la revendication 1, caractérisé en ce que lesdits enroulements en boucles autour du trou comportent un nombre prédéterminé de boucles dont les brins entourant ledit trou sont sensiblement parallèles entre eux (13, 14) et de boucles dont les brins se croisent (13a, 14a).

3. Dispositif selon l'une des revendications précédentes, caractérisé en ce que ledit premier moyen d'assemblage est en forme de chape dont les deux flasques (35, 36) comportent lesdits enroulements en boucles de fils de renfort.

4. Dispositif selon l'une des revendications précédentes, caractérisé en ce qu'il comporte des inserts enrobés par les fils imprégnés de résine.

5. Procédé de fabrication d'un dispositif selon l'une des revendications précédentes, comportant les étapes suivantes :
- on fait tourner un mandrin (3; 20) autour d'un axe zz',
- on déplace un moyen de guidage (5) d'au moins une fibre (4) selon deux directions xx' et yy',
dans lequel le mandrin comporte une partie conique mâle (21) d'axe zz' et au moins une tige (11; 25) d'axe sensiblement orthogonal à l'axe zz', on contrôle les déplacements du mandrin et du moyen de guidage pour effectuer des enroulements de fibres en spires circonférentielles (12) autour de l'axe zz' sur la partie conique du mandrin et en boucles longitudinales autour de ladite tige.

6. Procédé selon la revendication 5, caractérisé en ce que le moyen de guidage se déplace selon une direction parallèle à zz', l'autre direction de déplacement lui étant perpendiculaire.

7. Procédé selon l'une des revendications 5 ou 6, caractérisé en ce que le mandrin comporte plusieurs tiges d'axe sensiblement orthogonal à l'axe zz'.

8. Procédé selon l'une des revendications 5 à 7, caractérisé en ce que la fibre est imprégnée de résine.

9. Procédé selon l'une des revendications 5 à 8, caractérisé en ce que la résine est polymérisée sur le mandrin.

10. Procédé selon l'une des revendications 5 à 9, caractérisé en ce que le mandrin bobiné par les fibres imprégnées est entouré par des coquilles donnant une forme extérieure régulière à ladite pièce.

11. Procédé selon la revendication 5, caractérisé en ce qu'un programme de machine à commande numérique contrôle et synchronise lesdits déplacements du moyen de guidage et du mandrin, et en ce que la résistance mécanique des pièces obtenues est prédéterminée par certains paramètres dudit programme.

## Claims

1. A mechanical linking device (31, 40) designed to connect two elements to one another, the said device having a main axis (zz', 44) and two means to provide a connection with each of the said elements comprising resin-coated reinforcing fibres, a first connecting means (35, 36; 42) having at least one bore (33, 34) designed to receive a rod (43) whose axis is essentially orthogonal to the said main axis and formed by loops of fibres, characterised in that the said device has circumferential windings combined with longitudinal windings so that it can be adjusted essentially to withstand tractional stress between the two elements, the second connecting means has a conical bore (32; 41) coaxial with the said main axis, the narrow neck of which is arranged at a greater distance from the said first connecting means relative to the base of the cone, the said conical bore is basically formed by the circumferential winding (12) around the main axis and the said first means is formed by loop windings around the said bore, the strands (13, 14; 13a, 14a) of which form the longitudinal windings.

2. A device as claimed in claim 1, characterised in that the said loop windings around the bore consist of a predetermined number of loops whose strands surrounding the bore are essentially parallel with one another (13, 14) and of loops whose strands cross one another (13a, 14a).

3. A device as claimed in one of the preceding claims, characterised in that the said first connecting means is shaped as a fork, the two flanges (35, 36) of which have the said loop windings of reinforcing wires.

4. A device as claimed in one of the preceding claims, characterised in that it has inserts coated with the resin-impregnated wires.

5. A method of manufacturing a device as claimed in one of the preceding claims, comprising the following steps:
- a spindle (3; 20) is rotated about an axis zz',
- a means (5) for guiding at least one fibre (4) is displaced in two directions xx' and yy',
in which the spindle has a male, conical part (21) with an axis zz' and at least one rod (11; 25) whose axis is essentially orthogonal to the axis zz', the displacements of the spindle and guiding means are controlled so as to form fibre windings in circumferential turns (12) about the axis zz' over the conical portion of the spindle and in longitudinal loops around the said rod.

6. A method as claimed in claim 5, characterised in that the guiding means is displaced in a direction parallel with zz', the other direction of displacement being perpendicular thereto.

7. A method as claimed in one of claims 5 or 6, characterised in that the spindle has several rods whose axes are essentially orthogonal to the axis zz'.

8. A method as claimed in one of claims 5 to 7, characterised in that the fibre is impregnated with resin.

9. A method as claimed in one of claims 5 to 8, characterised in that the resin is polymerised on the spindle.

10. A method as claimed in one of claims 5 to 9, characterised in that the spindle wound with the impregnated fibres is enclosed in shells to give the said work-piece a regular external contour.

11. A method as claimed in claim 5, characterised in that a digitally controlled machine programme controls and synchronises the said displacements of the guiding means and spindle and the mechanical resistance of the finished parts is pre-determined by certain parameters of the said programme.

## Patentansprüche

1. Vorrichtung zur mechanischen Verbindung (31, 40) zum Verbinden zweier Elemente miteinander, wobei die Vorrichtung eine Hauptachse (zz', 44) und zwei Montagemittel umfaßt, wobei jedes dieser Elemente harzumhüllte Verstärkungsfasern umfaßt, ein erstes Montagemittel (35, 36; 42) wenigstens über ein Loch (33, 34) verfügt, das so ausgebildet ist, daß es eine Stange (43) aufnimmt, deren Achse im wesentlichen orthogonal zu dieser Hauptachse ist und durch Faserschleifen gebildet ist, dadurch gekennzeichnet, daß diese Vorrichtung Umfangswicklungen, kombiniert mit Längswicklungen, derart umfaßt, daß sie geeignet ist, hauptsächlich Zugkräfte zwischen den beiden Elementen zu erfassen, daß das zweite Montagemittel eine konische Bohrung (32; 41) koaxial zu dieser Hauptachse umfaßt, deren schmaler Hals unter einer größeren Entfernung von diesem ersten Montagemittel bezogen auf die Basis des Konus angeordnet ist, daß diese konische Bohrung hauptsächlich durch Umfangswicklungen (12) um die Hauptachse gebildet ist und daß dieses erste Mittel durch schleifenartige Wicklungen um dieses Loch gebildet ist, deren Stränge (13, 14; 13a, 14a) Längswicklungen bilden.

2. Vorrichtung nach Anspruch 1, dadurch gekennzeichnet, daß diese schleifenartigen Wicklungen um das Loch eine bestimmte Anzahl von Schleifen umfassen, deren dieses Loch umschließenden Stränge zueinander im wesentlichen parallel (13, 14) verlaufen und Schleifen umfassen, deren Adern bzw. Stränge sich kreuzen (13a, 14a).

3. Vorrichtung nach einem der vorhergehenden Ansprüche, dadurch gekennzeichnet, daß das erste Montagemittel in Kappenform ausgebildet ist, deren beiden Flansche (35, 36) diese Wicklungen aus Verstärkungsfasern bzw. -fäden umfassen.

4. Vorrichtung nach einem der vorhergehenden Ansprüche, dadurch gekennzeichnet, daß sie Einsätze, umhüllt durch harzimprägnierte Fäden, umfaßt.

5. Verfahren zum Herstellen einer Vorrichtung gemäß einem der vorhergehenden Ansprüche, die folgenden Stufen umfassend:
- man läßt einen Dorn (3; 20) sich um eine Achse zz' drehen,
- man bewegt oder verschiebt ein Führungsmittel (5) für wenigstens eine Faser (4) gemäß zwei Richtungen xx' und yy',
bei dem der Dorn einen männlichen konischen Teil (21) von der Achse zz' und wenigstens eine Stange (11; 25) von einer Achse im wesentlichen orthogonal zur Achse zz' umfaßt, man die Bewegungen oder Verschiebungen des Dornes und des Führungsmittels regelt, um Wicklungen von Fasern in Form von Umfangsspiralen (12) um die Achse zz' auf dem konischen Teil des Dornes und in Längsschleifen um diese Stange auszubilden.

6. Verfahren nach Anspruch 5, dadurch gekennzeichnet, daß das Führungsmittel sich gemäß einer Richtung parallel zu zz' verschiebt, wobei die andere Verschiebungsrichtung hierzu senkrecht verläuft.

7. Verfahren nach einem der Ansprüche 5 oder 6, dadurch gekennzeichnet, daß der Dorn mehrere Stangen von einer Achse im wesentlichen orthogonal zur Achse zz' umfaßt.

8. Verfahren nach einem der Ansprüche 5 bis 7, dadurch gekennzeichnet, daß die Faser harzimprägniert ist.

9. Verfahren nach einem der Ansprüche 5 bis 8, dadurch gekennzeichnet, daß das Harz auf dem Dorn polymerisiert wird.

10. Verfahren nach einem der Ansprüche 5 bis 9, dadurch gekennzeichnet, daß der durch die imprägnierten Fasern gewickelte Dorn von Schalen umgeben ist, die eine zu diesem Werkstück regelmäßige Außengestalt verleihen.

11. Verfahren nach Anspruch 5, dadurch gekennzeichnet, daß ein digitales Maschinensteuerprogramm diese Bewegungen des Führungsmittels und des Dorns regelt und synchronisiert und daß der mechanische Widerstand der erhaltenen Werkstücke durch gewisse Parameter dieses Programms bestimmt wird.
